# EUROPEAN PATENT SPECIFICATION

(11) **EP 2 195 900 B1**
(45) Date of publication and mention of the grant of the patent: **19.07.2017**
(21) Application number: 08804754.3
(22) Date of filing: 25.09.2008
(51) Int. Cl.: H02H 3/33

(54) **ELECTRICAL DEVICE FOR LOW-VOLTAGE APPLICATIONS**
ELEKTROGERÄT FÜR NIEDERSPANNUNGSANWENDUNGEN
DISPOSITIF ELECTRIQUE POUR APPLICATIONS A BASSE TENSION

(30) Priority: 02.10.2007 IT MI20071888
(43) Date of publication of application: 16.06.2010
(73) Proprietor: ABB Schweiz AG, 5400 Baden (CH)
(72) Inventor: ANTONELLO, Paolo, I-20010 Arluno (IT); ASCARI, Claudio, I-20154 Milano (IT)
(74) Representative: De Bortoli, Eros
(86) International application number: PCT/EP2008/062868
(87) International publication number: WO 2009/043807

(56) References cited:
- EP-A- 1 562 213
- EP-A- 1 569 314
- EP-A- 1 744 428

## Description

The present invention relates to a low-voltage electrical device, and particularly to an electrical device for controlling a low-voltage system and automatically reclosing a residual current circuit-breaker with which said device can be associated.

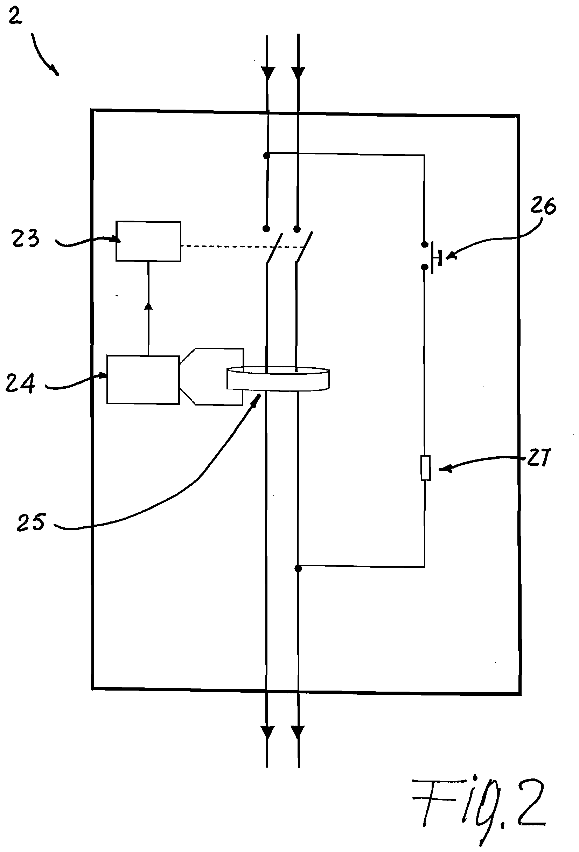

Residual current circuit-breakers are normally used in electrical systems to provide protection against earth faults. In its most basic form, schematically illustrated in figure 2, a residual current circuit-breaker 2 normally comprises a residual current sensor 25 operatively connected, by means of an interface circuit 24, to a release actuator 23. In the event of a current imbalance between the conductors in the circuit due to an earth fault, the circuit-breaker trips, opening the contacts and breaking the circuit. There is also a test device for checking the functional efficiency of the circuit-breaker, which comprises a circuit with a test button 26 and a resistor 27. At regular intervals, the user should use this test button to close the test circuit and make the circuit-breaker trip.

One of the problems normally encountered with residual current circuit-breakers relates to the untimely tripping of the circuit-breaker as a result of a transient imbalance occurring in the system for some reason. Any such unnecessary tripping can be a cause of inconvenience and problems for the user, especially if the system concerned is not supervised and the circuit is consequently not restored immediately, or within a reasonable time interval.

Moreover, users sometimes fail to perform the necessary test at regular intervals. Any circuit-breaker malfunctions or component failures can prevent its efficient operation and the proper tripping of the residual current circuit-breaker in the event of earth faults, and the consequences may even be very severe.

In addition, the circuit-breaker test phase entails opening the circuit, with a consequent loss of continuity in the power supply to the system.

Clearly, therefore, residual current circuit-breakers of the known type have a number of drawbacks that various attempts have been made to overcome, but they have so far not succeeded in doing so in a fully satisfactory manner. In fact, there are numerous known devices that can be associated with residual current circuit-breakers to enable one or more of the above-described problems to be overcome, but not completely and entirely effectively.

Patent application EP1744428 discloses a known controlling device for resetting a circuit breaker**.**

Based on these considerations, the main technical aim of the present invention is to produce an electrical device for use in low-voltage applications that enables the above-described drawbacks to be overcome.

As part of said aim, one object of the present invention is to provide a low-voltage
device that enables a residual current circuit-breaker associated therewith to be reclosed automatically.

Another object of the present invention is to provide a low-voltage device that enables a residual current circuit-breaker to be automatically reclosed and that is capable of checking the status of the system downstream from said circuit-breaker.

Another object of the present invention is to provide a low-voltage device that enables a residual current circuit-breaker to be automatically reclosed and that simultaneously guarantees operator safety.

Another object of the present invention is to provide a low-voltage device that is capable of automatically performing a periodic test on the functional efficiency of the circuit-breaker with which it is associated.

Another object of the present invention is to provide a low-voltage device that is capable of maintaining the continuity of supply during tests on the functional efficiency of the circuit-breaker.

Another object of the present invention is to provide an electrical device for use in low-voltage applications comprising a limited number of components, and that is easy to assemble and install.

Another, not necessarily last, object of the present invention is to provide an electrical device for use in low-voltage applications that is highly reliable and relatively easy to manufacture at competitive costs.

This technical aim, as well as these and other objects that will become more evident later on, are achieved by means of a low-voltage electrical device for controlling a system and for automatically reclosing a residual current circuit-breaker associated therewith,

### according to the claims proposed in the following.

The functional features of the device according to the invention are such that it enables the circuit-breaker to be reset automatically after checking the status of the system, i.e. that there are no faults downstream from the circuit-breaker. In other words, in the event of transient phenomena, or after any untimely tripping of the circuit-breaker, the device according to the invention is capable of automatically restoring the functional efficiency of the system.

Further characteristics and advantages of the invention will emerge more clearly from the description of preferred, but non-limiting embodiments of a device according to the invention, as shown in the examples in the attached drawings, wherein:
- figure 1 is a schematic representation of a portion of a low-voltage system comprising a residual current circuit-breaker and a device according to the invention;
- figure 2 is a schematic representation of a residual current circuit-breaker;
- figure 3 is a schematic representation of a first embodiment of the device according to the invention;
- figure 4 is a schematic representation of a second embodiment of the device according to the invention;
- figure 5 is a schematic representation of a third embodiment of the device according to the invention;
- figure 6 is a schematic representation of a portion of a low-voltage system comprising a residual current circuit-breaker, the device according to the invention (as shown in figure 5) and a bypass device.

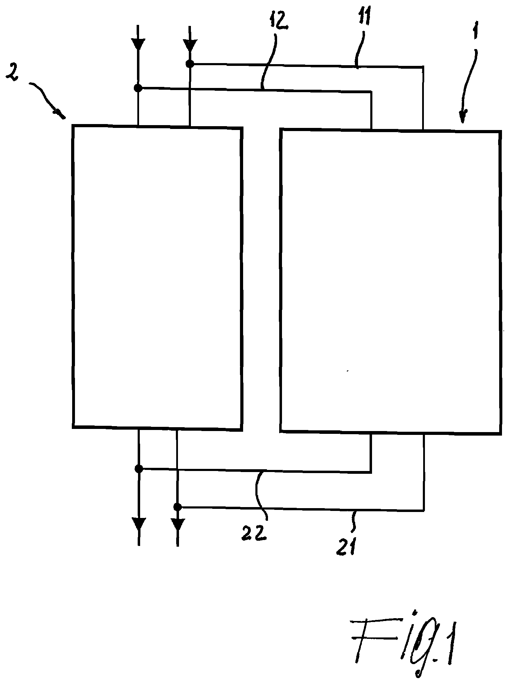

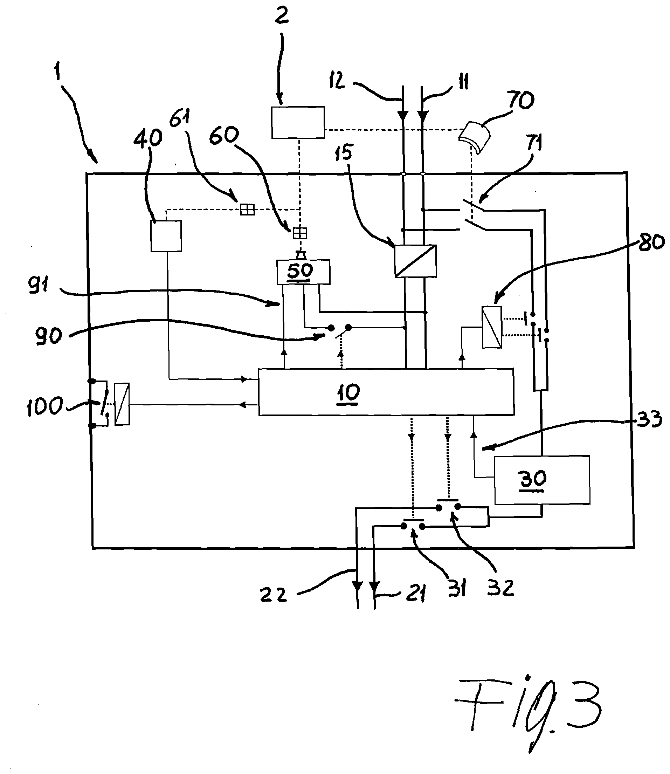

With reference to figures 1 and 3, one embodiment of the low-voltage electrical device I according to the invention comprises first connection means 11,12 and second connection means 21,22 for connecting said device 1 to said system. In other words, the first connection means 11 and 12 enable its electrical connection to the phase and neutral conductors of the system upstream from the residual current circuit-breaker 2, while the second connection means 21 and 22 enable its electrical connection to the phase and neutral conductors of the system downstream from said circuit-breaker 2.

The device 1 also comprises a control unit 10, consisting for instance of a microcontroller, which is operatively connected to first means 30 for controlling the system, that can in turn be operatively connected to the system downstream from said circuit-breaker 2, by means of the conductors 21 and 22. The control unit 10 is suitably powered, e.g. by means of a suitable power supply 15, which is powered from the system. The first control means 30 can consist of a suitable circuit for checking the status of the system and identifying any faults downstream from the circuit-breaker 2, according to operative methods that are described later on.

The control unit 10 is operatively connected to second means 40 for controlling the status of said circuit-breaker 2, which can be operatively connected to said circuit-breaker 2 to enable a check on its status. These second control means 40 may consist, for instance, of a position sensor, such as a Hall sensor, suitable for connecting to the residual current circuit-breaker 2. This position sensor 40 is preferably designed to be operatively coupled to the handle on the circuit-breaker 2 by means of the circuit-breaker's resetting lever 61.

The control unit 10 is also operatively connected to actuating means 50, and it governs their operation; these actuating means 50 are operatively connected, in turn, to resetting means 60 that can be operatively connected to the residual current circuit-breaker 2, so as to reclose the latter according to operative methods that are described later on.

The device 1 according to the invention is enabled manually by mechanical enabling means 70 that can be operatively associated with said circuit-breaker 2. There are also first automatic means 80 for enabling said first means 30 for controlling the system, as well as second automatic means 90 for enabling said actuating means 50. Both the first 80 and the second 90 automatic means are governed by the control unit 10.

More in detail, the mechanical enabling means 70 preferably comprise a cursor operatively movable between a first position in which the device 1 is disabled and a second position in which the device 1 is enabled. The cursor 70 is also designed to be operatively coupled with said residual current circuit-breaker 2, to prevent its manual operation when the cursor is in said second, enabled position.

The device is preferably enabled/disabled manually by means of said cursor 70 closing/opening the contacts 71.

The device according to the invention functions as follows. As shown in figure 1, the device 1 can be connected to the low-voltage system in parallel with the circuit-breaker 2 by means of the conductors 11, 12 and 21, 22, respectively upstream and downstream from the circuit-breaker 2. The device 1 is also operatively connected to the residual current circuit-breaker 2, and in particular to the resetting lever 61 on the circuit-breaker. This operative connection enables the device 1 to determine the status (open/closed) of the circuit-breaker by means of the sensor 40 coupled to said resetting lever 61; it can also reclose the circuit-breaker's contacts by means of the actuating means 50 and the resetting means 60, which are also operatively coupled to the resetting lever 61 on the circuit-breaker 2.

The device 1 is enabled by displacing the cursor 70 from a first position in which the device 1 is disabled to a second position in which the device 1 is enabled by the closing of the contacts 71. At the same time, when in the enabled position, the cursor 70 interacts operatively with the circuit-breaker, e.g. by covering its handle and preventing access thereto. It is therefore impossible to take action manually on the circuit-breaker when the device is enabled; likewise, in order to take action manually on the handle of the circuit-breaker 2, it becomes necessary to move the cursor 70 and thereby disable the device 1, and thus prevent any automatic reclosing of the circuit-breaker. This fully guarantees the safety of any operators needing to take action on the system. In fact, the circuit-breaker can only be opened manually by displacing the cursor and freeing the handle: this action disables the device 1 and the related automatic reclosing function, enabling operators to take action in safety.

In the situation in which the device 1 is enabled by the position sensor 40, which is connected to the resetting lever 61 on the circuit-breaker 2, the control unit 10 can receive information on the status of the circuit-breaker. In particular, when the residual current circuit-breaker's contacts are opened, the control unit 10 receives a tripping signal detected by said second means 40 for controlling the status of the circuit-breaker 2. As a consequence of this, the control unit 10 sends an enabling signal to the first automatic means 80 for enabling said first means 30 for controlling the system. In practice, the first automatic enabling means 80 can advantageously consist of a relay that enables the system control circuit 30.

When it is enabled, the system control circuit 30 performs a check on the status of the system downstream from the circuit-breaker and sends a signal 33 to indicate the status of the system to the control unit 10. The system control circuit 30 preferably checks that there are no earth fault currents, by sequentially checking first the circuit connected to the phase downstream and then the circuit connected to the neutral downstream, by closing the switches 31 and 32. The outcome of the test is sent to the control unit 10 by means of the signal 33.

If a fault is identified, the control unit 10 enables cut-out signalling means 100. On the other hand, if no earth fault is detected downstream from the circuit-breaker 2, the control unit 10 sends an enabling signal to said second automatic enabling means 90 and an actuating signal 91 to said actuating means 50. In practice, the actuating means 50 may consist of a suitable motor that is automatically enabled by the closing of the switch 90 that enables it to be powered. The control unit 10 also sends a suitable signal 91 (e.g. a square wave) to drive the motor 50 that takes effect on the resetting means 60 - which consist, for instance, of a bevel gear operatively connected to the resetting lever 61 - to reclose the residual current circuit-breaker 2. If the residual current circuit-breaker trips a preset number of times (e.g. 3-4 times) at intervals lower than a preset time (e.g. 16 seconds), then the control unit 10 makes the device cut out and stop attempting any automatic reclosing actions, and it enables the cut-out signalling means 100.

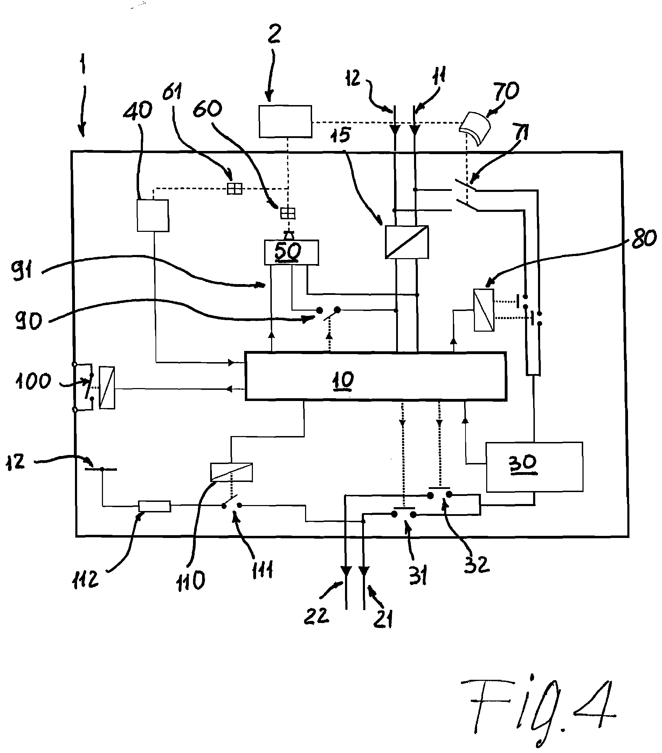

According to one particular embodiment of the invention, shown in figure 4, the device 1 can advantageously also include third automatic means 110 for diagnostics on said circuit-breaker 2. In other words, instead of action being taken manually on the residual current circuit-breaker 2, by manually pressing the test button 26, the device 1 according to the invention enables an automatic test on the functional efficiency of the residual current circuit-breaker at preset intervals.

Prompted by an automatic test command coming from said control unit 10, the diagnostic means 110 close a resistor 112 between a conductor 12 upstream and a conductor 21 downstream from said device 1, thus making the circuit-breaker 2 trip and thereby testing its functional efficiency. As soon as the residual current circuit-breaker 2 has been tripped, the control unit 10 enables the circuit-breaker 2 to be reclosed according to the previously-described procedure.

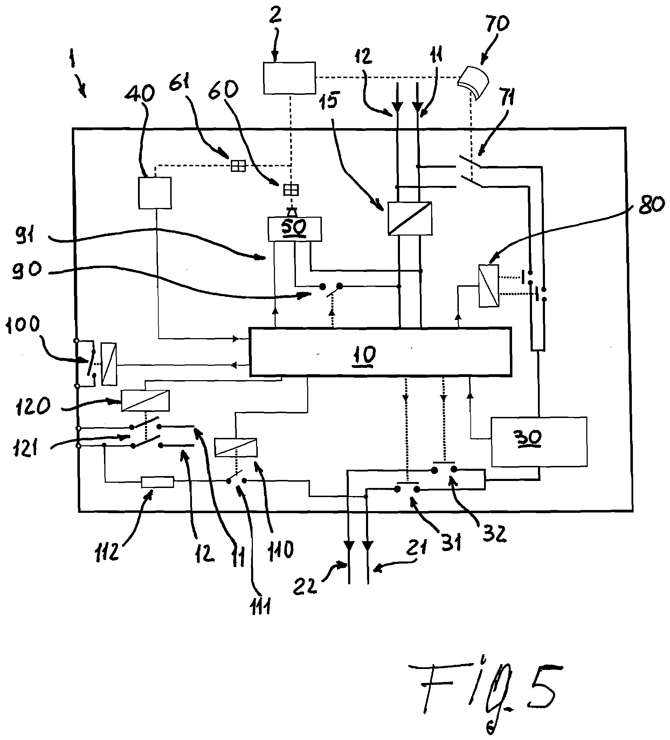

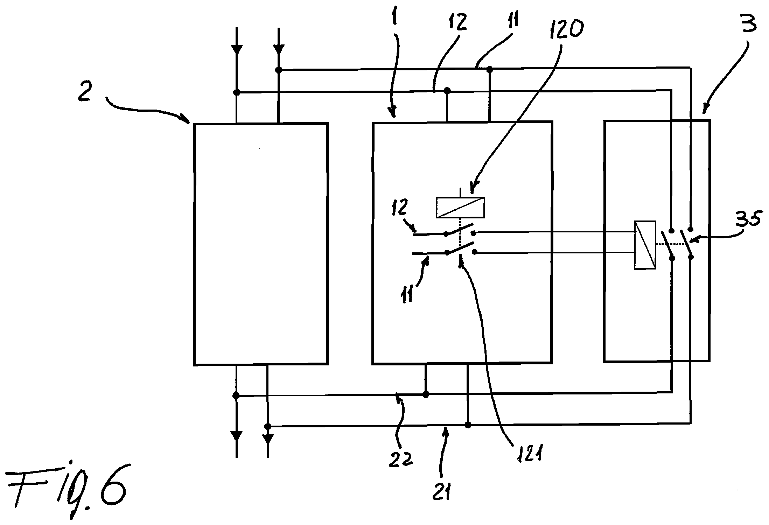

To avoid any drawbacks for the user deriving from the power supply being cut off during this automatic test, one particular embodiment of the invention, shown in figures 5 and 6, enables the continuity of the power supply to be maintained during the completion of this automatic test.

In this embodiment, the device 1 comprises fourth automatic bypassing means 120 that are governed by the control unit 10 and designed to be operatively connected to a bypass device 3 suitable for connecting electrically to said system upstream and downstream from said circuit-breaker 2. The bypass device 3 comprises contacts 35 that can be opened and closed, by means of a coil, for instance, as a result of a command received from the device 1. These fourth automatic bypass means 120 are generally enabled by the control unit 10 immediately before an automatic test is conducted, determining the closure of the contacts 35 in said bypass device 3. In other words, the contacts 121 in the relay 120 are made to close before the contacts 111 in the automatic testing relay 110 are closed. The coil in the bypass relay is consequently powered and the contacts 35 close to maintain the continuity of the power supply during the automatic testing process. Once the test has been completed and the circuit-breaker 2 has been reclosed automatically, the control unit 10 makes the bypass contacts 35 open.

The device according to the invention can be made with an extremely compact design, placing at least the control unit 10, the first means 30 for controlling the system, the second means 40 for controlling the status of the circuit-breaker, the actuating means 50, the resetting means 60, the first automatic means 80 for enabling said first control means 30, the second automatic means 90 for enabling said actuating means 50, and the cut-out signalling means 100 all inside a single housing made of insulating material. In the event of the automatic testing and bypass functions being included, the third automatic means 110 for circuit-breaker diagnostics and the fourth automatic bypass means 120 can also be placed inside the same housing.

In the light of the above description, it is clear that the low-voltage device according to the invention meets the stated main aim and objects. In fact, the device enables an residual current circuit-breaker associated therewith to be reclosed automatically after a check on the status of the system downstream from the circuit-breaker. This enables discontinuities in the power supply to the system to be avoided whenever they are due to a malfunction or an untimely tripping of the circuit-breaker, while still complying with the necessary safety requirements. By interacting with the handle on the circuit-breaker, the mechanical enabling means prevent any manual action on the circuit-breaker whenever the device is enabled, thereby guaranteeing operator safety.

Moreover, in several particular embodiments, the device according to the invention enables routine tests on the functional efficiency of the residual current circuit-breaker to be performed automatically and, where desirable, while maintaining the continuity of the power supply to the system by means of suitably-enabled bypass functions.

It is worth emphasizing that the device according to the invention can incorporate a large number of functions within a single module, with consequent savings in terms of the costs of manufacture and installation.

Based on the above description, other characteristics, modifications and improvements are possible and self-evident to a person skilled in the art. Any such characteristics, modifications and improvements shall be deemed part of the present invention. In practical terms, any materials may be used to manufacture the device, and in any suitable size and shape, according to need and the state of the art.

## Claims

1. A low-voltage electrical device (1) for controlling a system and automatically reclosing a residual current circuit-breaker (2) with which it can be associated, **characterised in that** it comprises:
- first (11, 12) and second (21, 22) means for connecting said device (1) to said system;
- a unit (10) for controlling said device (1);
- first means (30) for controlling the system, operatively connected to said control unit (10) and designed to be operatively connected to said system downstream from said circuit-breaker (2);
- second means (40) for controlling the status of said circuit-breaker (2), operatively connected to said control unit (10) and designed to be operatively connected to said circuit-breaker (2);
- actuating means (50) governed by said control unit (10);
- resetting means (60) operatively connected to said actuating means (50) and designed to be operatively connected to said circuit-breaker (2);
- mechanical means (70) for enabling said device (1) and suitable for being operatively associated with said circuit-breaker (2);
- first automatic means (80) for enabling said first means (30) for controlling the system, governed by said control unit (10), **said first automatic means consisting of a relay that enables said first means (30) for controlling the system;**
- second automatic means (90) for enabling said actuating means (50) governed by said control unit (10).

2. A device (1) according to claim 1, **characterised in that** said mechanical enabling means (70) comprise a cursor operatively movable between a first position in which the device (1) is disabled and a second position in which the device (1) is enabled, said cursor being suitable for coupling operatively with said residual current circuit-breaker (2) to prevent its manual operation when the cursor occupies said second position.

3. A device (1) according to claim 2, **characterised in that** said device is enabled/disabled by means of the closing/opening of the contacts (71) induced by said cursor (70).

4. A device (1) according to one or more of the previous claims, **characterised in that**, when a trip signal coming from the circuit-breaker (2) is identified by said second means (40) for controlling the status of said circuit-breaker (2), the control unit (10) sends an enabling signal to said first automatic means (80) for enabling said first means (30) for controlling the system.

5. A device (1) according to claim 4, **characterised in that**, when said first automatic enabling means (80) are enabled, the first means (30) for controlling the system run a test on the status of the system and send a signal (33) indicating the status of the system to the control unit (10).

6. A device (1) according to claim 5, **characterised in that**, when said signal (33) indicates that an earth fault has occurred, the control unit (10) enables cut-out signalling means (100).

7. A device (1) according to claim 5, **characterised in that**, when said signal (33) is indicative of a normal status of the system, the control unit (10) sends a signal that enables said second automatic enabling means (90) and a signal that starts (91) said actuating means (50).

8. A device (1) according to claim 7, **characterised in that** said actuating means (50) take effect on said resetting means (60).

9. A device (1) according to one or more of the previous claims, **characterised in that** it comprises third automatic means (110) for performing diagnostics on said circuit-breaker (2).

10. A device (1) according to claim 9, **characterised in that**, based on an automatic testing command from said control unit (10), said third automatic diagnostic means (110) close a resistor (112) between one conductor (12) upstream and one conductor (21) downstream from said device (1).

11. A device (1) according to claim 9 or 10, **characterised in that** it comprises fourth automatic bypass means (120) governed by the control unit (10) and designed to be operatively connected to a bypass device (3) suitable for connecting electrically to said system upstream and downstream from said circuit-breaker (2), and comprising contacts (35) that can be opened and closed.

12. A device (1) according to claim 11, **characterised in that** said fourth automatic bypass means (120) are enabled by said control unit (10) immediately before said automatic testing function is implemented, thus making the contacts (35) in said bypass device (3) close.

13. A device (1) according to one or more of the previous claims, **characterised in that** it comprises a housing made of insulating material and containing: the control unit (10), the first means (30) for controlling the system, the second means (40) for controlling the status of said circuit-breaker (2), the actuating means (50), the resetting means (60), the first automatic means (80) for enabling said first control means (30), the second automatic means (90) for enabling said actuating means (50), and the means the signalling the circuit-breaker cut-out (100).

14. A device (1) according to claim 13, **characterised in that** said housing made of insulating material also contains said third automatic means (110) for diagnostics on said circuit-breaker (2), and said fourth automatic bypass means (120).

## Patentansprüche

1. Elektrisches Niederspannungsgerät (1) zum Steuern eines Systems und zum automatischen Wiedereinschalten eines Fehlerstromschutzschalters (2), dem es zugeordnet werden kann, **dadurch gekennzeichnet, dass** es umfasst:
- erste (11, 12) und zweite (21, 22) Mittel zum Verbinden des Geräts (1) mit dem System;
- eine Einheit (10) zum Steuern des Geräts (1);
- erste Mittel (30) zum Steuern des Systems, die betriebsmäßig mit der Steuereinheit (10) verbunden sind und die gestaltet sind, um mit dem System stromabwärts von dem Schutzschalter (2) betriebsmäßig verbunden zu sein;
- zweite Mittel (40) zum Steuern des Status des Schutzschalters (2), die betriebsmäßig mit der Steuereinheit (10) verbunden sind und die gestaltet sind, um mit dem Schutzschalter (2) betriebsmäßig verbunden zu sein;
- Betätigungsmittel (50), die von der Steuereinheit (10) geregelt werden;
- Rückstellmittel (60), die mit den Betätigungsmitteln (50) betriebsmäßig verbunden sind und die gestaltet sind, um mit dem Schutzschalter (2) betriebsmäßig verbunden zu sein;
- mechanische Mittel (70) zum Aktivieren des Geräts (1) und geeignet, um operativ dem Schutzschalter (2) zugeordnet zu sein;
- erste automatische Mittel (80) zum Aktivieren der ersten Mittel (30) zum Steuern des Systems, geregelt von der Steuereinheit (10), wobei die ersten automatischen Mittel aus einem Relais bestehen, das die ersten Mittel (30) zum Steuern des Systems aktiviert;
- zweite automatische Mittel (90) zum Aktivieren der Betätigungsmittel (50), geregelt von der Steuereinheit (10).

2. Gerät (1) nach Anspruch 1, **dadurch gekennzeichnet, dass** die mechanischen Aktivierungsmittel (70) einen Positionsanzeiger umfassen, der betriebsmäßig zwischen einer ersten Position, in der das Gerät (1) aktiviert ist, und einer zweiten Position, in der das Gerät (1) deaktiviert ist, bewegbar ist, wobei der Positionsanzeiger zum betriebsmäßigen Koppeln mit dem Fehlerstromschutzschalter (2) geeignet ist, um dessen manuellen Betrieb zu verhindern, wenn der Positionsanzeiger die zweite Stellung einnimmt.

3. Gerät (1) nach Anspruch 2, **dadurch gekennzeichnet, dass** das Gerät aktiviert/deaktiviert wird mittels des Schließens/Öffnens der Kontakte (71), ausgelöst von dem Positionsanzeiger (70).

4. Gerät (1) nach einem oder mehreren der vorstehenden Ansprüche, **dadurch gekennzeichnet, dass**, wenn ein von dem Schutzschalter (2) kommendes Auslösesignal von den zweiten Mitteln (40) zum Steuern des Status des Schutzschalters (2) identifiziert wird, die Steuereinheit (10) ein Aktivierungssignal zu den ersten automatischen Mitteln (80) sendet, zum Aktivieren der ersten Mittel (30) zum Steuern des Systems.

5. Gerät (1) nach Anspruch 4, **dadurch gekennzeichnet, dass**, wenn die ersten automatischen Aktivierungsmittel (80) aktiviert sind, die ersten Mittel (30) zum Steuern des Systems eine Prüfung des Status des Systems durchführen und ein Signal (33) senden, das den Status des Systems zu der Steuereinheit (10) anzeigt.

6. Gerät (1) nach Anspruch 5, **dadurch gekennzeichnet, dass**, wenn das Signal (33) anzeigt, dass ein Erdschluss aufgetreten ist, die Steuereinheit (10) Abschaltsignalisierungsmittel (100) aktiviert.

7. Gerät (1) nach Anspruch 5, **dadurch gekennzeichnet, dass**, wenn das Signal (33) einen normalen Status des Systems anzeigt, die Steuereinheit (10) ein Signal, das die zweiten automatischen Aktivierungsmittel (90) aktiviert, und ein Signal (91), das die Betätigungsmittel (50) startet, sendet.

8. Gerät (1) nach Anspruch 7, **dadurch gekennzeichnet, dass** die Betätigungsmittel (50) einen Einfluss auf die Rückstellmittel (60) haben.

9. Gerät (1) nach einem oder mehreren der vorstehenden Ansprüche, **dadurch gekennzeichnet, dass** es dritte automatische Mittel (110) zum Durchführen von Diagnostik an dem Schutzschalter (2) umfasst.

10. Gerät (1) nach Anspruch 9, **dadurch gekennzeichnet, dass**, basierend auf einem automatischen Prüfbefehl von der Steuereinheit (10), die dritten automatischen Mittel (110) einen Wiederstand (112) zwischen einem Leiter (12) stromaufwärts und einem Leiter (21) stromabwärts von dem Gerät (1) schließen.

11. Gerät (1) nach Anspruch 9 oder 10, **dadurch gekennzeichnet, dass** es vierte automatische Mittel (120) umfasst, die von der Steuereinheit (10) geregelt sind und die gestaltet sind, um mit einem Umgehungsgerät (3) betriebsmäßig verbunden zu sein, das geeignet ist, zum elektrischen Verbinden mit dem System stromaufwärts und stromabwärts von dem Schutzschalter (2), und die Kontakte (35) umfassen, die geöffnet und geschlossen werden können.

12. Gerät (1) nach Anspruch 11, **dadurch gekennzeichnet, dass** die vierten automatischen Mittel (120) unmittelbar bevor die automatische Prüffunktion implementiert ist, von der Steuereinheit (10) aktiviert werden, wodurch die Kontakte (35) in dem Umgehungsgerät (3) sich schließen.

13. Gerät (1) nach einem oder mehreren der vorstehenden Ansprüche, **dadurch gekennzeichnet, dass** es ein Gehäuse umfasst, das aus einem isolierenden Material gefertigt ist und aufweist: die Steuereinheit (10), die ersten Mittel (30) zum Steuern des Systems, die zweiten Mittel (40) zum Steuern des Status des Schutzschalters (2), die Betätigungsmittel (50), die Rückstellmittel (60), die ersten automatischen Mittel (80) zum Aktivieren der ersten Steuermittel (30), die zweiten automatischen Mittel (90) zum Aktivieren der Betätigungsmittel (50) und die Mittel (100) zum Signalisieren des Abschaltens des Schutzschalters.

14. Gerät (1) nach Anspruch 13, **dadurch gekennzeichnet, dass** das aus isolierendem Material gefertigte Gehäuse weiter die dritten automatischen Mittel (110) zur Diagnostik an dem Schutzschalter (2) und die vierten automatischen Umgehungsmittel (120) aufweist.

## Revendications

1. Dispositif électrique à basse tension (1) pour commander un système et automatiquement refermer un disjoncteur différentiel de fuite à la terre (2) avec lequel il peut être associé, **caractérisé en ce qu'**il comprend :
- des premiers (11, 12) et seconds (21, 22) moyens pour connecter ledit dispositif (1) audit système ;
- une unité (10) pour commander ledit dispositif (1) ;
- des premiers moyens (30) pour commander le système, connectés fonctionnellement à ladite unité de commande (10) et conçus pour être connectés fonctionnellement audit système en aval dudit disjoncteur (2) ;
- des seconds moyens (40) pour commander l'état dudit disjoncteur (2), connectés fonctionnellement à ladite unité de commande (10) et conçus pour être connectés fonctionnellement audit disjoncteur (2) ;
- des moyens d'actionnement (50) gouvernés par ladite unité de commande (10) ;
- des moyens de réarmement (60) connectés fonctionnellement auxdits moyens d'actionnement (50) et conçus pour être connectés fonctionnellement audit disjoncteur (2) ;
- des moyens mécaniques (70) pour activer ledit dispositif (1) et appropriés pour être fonctionnellement associés audit disjoncteur (2) ;
- des premiers moyens automatiques (80) pour activer lesdits premiers moyens (30) pour commander le système, gouvernés par ladite unité de commande (10), lesdits premiers moyens automatiques étant constitués d'un relais qui active lesdits premiers moyens (30) pour commander le système ;
- des deuxièmes moyens automatiques (90) pour activer lesdits moyens d'actionnement (50) gouvernés par ladite unité de commande (10).

2. Dispositif (1) selon la revendication 1, **caractérisé en ce que** lesdits moyens d'activation mécaniques (70) comprennent un curseur fonctionnellement mobile entre une première position dans laquelle le dispositif (1) est désactivé et une seconde position dans laquelle le dispositif (1) est activé, ledit curseur étant approprié pour être couplé fonctionnellement audit disjoncteur différentiel de fuite à la terre (2) pour empêcher son actionnement manuel lorsque le curseur occupe ladite seconde position.

3. Dispositif (1) selon la revendication 2, **caractérisé en ce que** ledit dispositif est activé/désactivé au moyen de la fermeture/de l'ouverture des contacts (71), provoquées par ledit curseur (70).

4. Dispositif (1) selon l'une ou plusieurs des revendications précédentes, **caractérisé en ce que**, lorsqu'un signal de déclenchement provenant du disjoncteur (2) est identifié par lesdits seconds moyens (40) pour commander l'état dudit disjoncteur (2), l'unité de commande (10) envoie un signal d'activation auxdits premiers moyens automatiques (80) pour activer lesdits premiers moyens (30) pour commander le système.

5. Dispositif (1) selon la revendication 4, **caractérisé en ce que**, lorsque lesdits premiers moyens d'activation automatiques (80) sont activés, les premiers moyens (30) pour commander le système exécutent un essai sur l'état du système et envoient un signal (33) indiquant l'état du système à l'unité de commande (10).

6. Dispositif (1) selon la revendication 5, **caractérisé en ce que**, lorsque ledit signal (33) indique qu'un défaut à la terre s'est produit, l'unité de commande (10) active des moyens de signalisation de coupure (100).

7. Dispositif (1) selon la revendication 5, **caractérisé en ce que**, lorsque ledit signal (33) est indicatif d'un état normal du système, l'unité de commande (10) envoie un signal qui active lesdits deuxièmes moyens d'activation automatiques (90) et un signal qui démarre (91) lesdits moyens d'actionnement (50).

8. Dispositif (1) selon la revendication 7, **caractérisé en ce que** lesdits moyens d'actionnement (50) agissent sur lesdits moyens de réarmement (60).

9. Dispositif (1) selon l'une ou plusieurs des revendications précédentes, **caractérisé en ce qu'**il comprend des troisièmes moyens automatiques (110) pour réaliser des diagnostics sur ledit disjoncteur (2).

10. Dispositif (1) selon la revendication 9, **caractérisé en ce que**, en fonction d'une instruction d'essai automatique à partir de ladite unité de commande (10), lesdits troisièmes moyens de diagnostic automatiques (110) ferment une résistance (112) entre un conducteur (12) en amont et un conducteur (21) en aval dudit dispositif (1).

11. Dispositif (1) selon la revendication 9 ou 10, **caractérisé en ce qu'**il comprend des quatrièmes moyens de dérivation automatiques (120) gouvernés par l'unité de commande (10) et conçus pour être connectés fonctionnellement à un dispositif de dérivation (3) approprié pour se connecter électriquement audit système en amont et en aval dudit disjoncteur (2), et comprenant des contacts (35) qui peuvent être ouverts et fermés.

12. Dispositif (1) selon la revendication 11, **caractérisé en ce que** lesdits quatrièmes moyens de dérivation automatiques (120) sont activés par ladite unité de commande (10) immédiatement avant que ladite fonction d'essai automatique soit mise en oeuvre, faisant ainsi en sorte que les contacts (35) dans ledit dispositif de dérivation (3) se ferment.

13. Dispositif (1) selon l'une ou plusieurs des revendications précédentes, **caractérisé en ce qu'**il comprend un boîtier fait de matériau isolant et contenant : l'unité de commande (10), les premiers moyens (30) pour commander le système, les seconds moyens (40) pour commander l'état dudit disjoncteur (2), les moyens d'actionnement (50), les moyens de réarmement (60), les premiers moyens automatiques (80) pour activer lesdits premiers moyens de commande (30), les deuxièmes moyens automatiques (90) pour activer lesdits moyens d'actionnement (50), et les moyens la signalisation de la coupure (100) de disjoncteur.

14. Dispositif (1) selon la revendication 13, **caractérisé en ce que** ledit boîtier fait de matériau isolant contient également lesdits troisièmes moyens automatiques (110) pour des diagnostics sur ledit disjoncteur (2), et lesdits quatrièmes moyens de dérivation automatiques (120).
